# FASCICULE DE BREVET EUROPEEN

(11) **EP 3 994 048 B1**
(45) Date de publication et mention de la délivrance du brevet: **07.06.2023**
(21) Numéro de dépôt: 20747022.0
(22) Date de dépôt: 23.06.2020
(51) Int. Cl.: B62D 21/11, B62D 27/04

(54) **ENSEMBLE DE TRAIN AVANT DE VÉHICULE COMPRENANT UN BERCEAU À CORNES ET DES TIRANTS DE BERCEAU FILTRÉS**
VORDERACHSANORDNUNG EINES FAHRZEUGS MIT EINEM HILFSRAHMEN MIT GEDÄMPFTEN WIEGEZUGSTANGEN UND HÖRNERN
VEHICLE FRONT AXLE ASSEMBLY COMPRISING A CRADLE WITH DAMPED CRADLE TIE RODS AND HORNS

(30) Priorité: 01.07.2019 FR 1907255
(43) Date de publication de la demande: 11.05.2022
(73) Titulaire: PSA Automobiles SA, 78300 Poissy (FR)
(72) Inventeur: MARCONOT, Pascal, 70400 TAVEY (FR); LE GUILLOU, Olivier, 25420 COURCELLES LES MONTBELIARD (FR)
(86) Numéro de dépôt international: PCT/FR2020/051087
(87) Numéro de publication internationale: WO 2021/001612

(56) Documents cités:
- EP-A1- 1 388 485
- EP-A2- 1 710 152
- US-A1- 2011 115 258

## Description

La présente invention revendique la priorité de la demande française 1907255 déposée le 01.07.2019.

L'invention concerne de manière générale un berceau de train avant destiné à un véhicule, en particulier à un véhicule automobile. Plus particulièrement, l'invention se rapporte à un ensemble de train avant de véhicule comportant un berceau du type à cornes et deux tirants de berceau.

Dans un véhicule automobile à moteur transversal à l'avant, le berceau de train avant supporte le groupe motopropulseur composé du moteur et de la boîte de vitesse, ainsi que des éléments de suspension des roues avant du véhicule et les liaisons de transmission avec celles-ci. Une barre anti-devers est habituellement fixée aussi sur le berceau et les éléments de suspension des roues avant.

Dans l'état de la technique, il est connu de fixer le berceau de type à cornes à la structure de caisse du véhicule par deux paires de liaisons mécaniques, généralement à l'aide de vis. En particulier, le document EP 1 388 485 A1 divulgue un ensemble de train avant de véhicule comprenant un berceau du type à cornes et deux tirants de berceau, ledit berceau comportant deux points arrière de fixation à une partie basse d'une structure de caisse de véhicule et deux points avant de fixation à un brancard de ladite structure de caisse de véhicule. Lesdits deux points avant de fixation sont assurés par lesdites cornes, et lesdits deux tirants de berceau assurent deux fixations mécaniques supplémentaires entre une partie avant dudit berceau et ledit brancard de façon à limiter un affaissement vertical dudit berceau en cas de choc.

Une première paire de liaisons mécaniques assure une fixation du berceau en partie basse de la structure de caisse, au moyen de deux points de fixation arrière du berceau à respectivement deux longerons latéraux, gauche et droite, de la structure de caisse.

Une deuxième paire de liaisons mécaniques assure une fixation du berceau en partie haute de la structure de caisse, au moyen de deux bras de fixation avant, gauche et droit, appelés « cornes », se projetant à partir de faces supérieures du berceau jusqu'à un brancard en surplomb de la structure de caisse.

L'incorporation d'articulations élastiques dans ces première et deuxième paires de liaisons mécaniques autorise un filtrage des vibrations mécaniques du train avant vers la structure de caisse et l'habitacle du véhicule. Le matériau élastomère des articulations élastiques autorise des micro-déplacements du berceau par rapport à sa position initiale et un filtrage des vibrations mécaniques.

Dans l'architecture de berceau de la technique antérieure décrite ci-dessus, l'ajout d'une troisième paire de liaisons mécaniques dans la partie avant du berceau est avantageuse pour limiter un affaissement vertical du berceau en cas de choc, affaissement qui empêche une absorption d'énergie entre le moteur et le berceau. Deux tirants de berceau, gauche et droit, fixés dans la partie avant du berceau et au brancard en surplomb de la structure de caisse sont adaptés pour procurer cette troisième paire de liaisons mécaniques.

Il est souhaitable de fournir un ensemble de train avant comprenant un berceau de type à cornes et des tirants de berceau aptes à limiter un affaissement vertical du berceau en cas de choc, qui soit optimisé pour filtrer des remontées de vibrations mécaniques et de bruit acoustique du train avant vers la structure de caisse et l'habitacle du véhicule, sans limitation des mouvements du berceau.

Selon un premier aspect, l'invention concerne un ensemble de train avant de véhicule comprenant un berceau du type à cornes et deux tirants de berceau, le berceau comportant deux points arrière de fixation élastique à une partie basse d'une structure de caisse de véhicule et deux points avant de fixation élastique à un brancard de la structure de caisse de véhicule, les deux points avant de fixation élastique étant assurés par les cornes, et les deux tirants de berceau assurant deux fixations mécaniques supplémentaires entre une partie avant du berceau et le brancard de façon à limiter un affaissement vertical du berceau en cas de choc. Conformément à l'invention, les deux tirants de berceau comprennent chacun au moins une articulation élastique à des extrémités de fixation.

Selon une caractéristique particulière, chacun des tirants de berceau est une pièce tubulaire en acier ayant deux extrémités écrasées comportant chacune un orifice de passage de vis et formant les extrémités de fixation, une articulation élastique étant logée dans au moins un orifice de passage de vis.

Selon une autre caractéristique particulière, l'articulation élastique comporte un élastomère inclus dans la famille des élastomères spéciaux.

Selon encore une autre caractéristique particulière, l'articulation élastique comporte un élastomère inclus dans la famille des élastomères très spéciaux.

Selon encore une autre caractéristique particulière, l'articulation élastique comporte un élastomère inclus dans la famille des élastomères généraux.

Selon encore une autre caractéristique particulière, les deux tirants de berceau sont fixés dans la partie avant du berceau respectivement sur deux prolonges de berceau.

Selon encore une autre caractéristique particulière, les deux tirants de berceau sont fixés respectivement sur deux oreillettes de fixation des deux prolonges de berceau.

Selon encore une autre caractéristique particulière, chaque oreillette de fixation comprend une vis de fixation soudée.

L'invention concerne aussi un véhicule automobile comprenant un ensemble de train avant tel que décrit brièvement ci-dessus.

D'autres avantages et caractéristiques de la présente invention apparaîtront plus clairement à la lecture de la description détaillée ci-dessous de plusieurs formes de réalisation particulières de l'invention, en référence aux dessins annexés, dans lesquels :
[Fig.1] La Fig.1 est une vue en perspective d'un ensemble de train avant selon l'invention comprenant un berceau à cornes et deux tirants de berceau.
[Fig.2] La Fig.2 est une vue partielle en coupe de la fixation à articulation élastique d'une extrémité de tirant de berceau à une oreille de fixation du berceau à cornes, dans l'ensemble de train avant de la Fig.1.

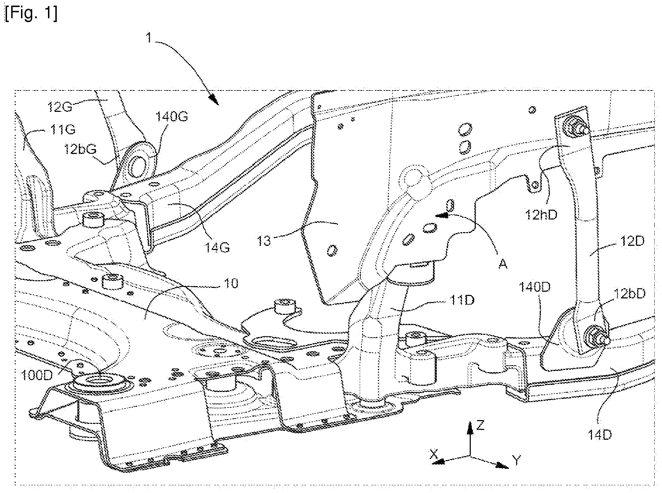

Dans les figures, les éléments identiques sont désignés par les mêmes références. Dans le repère spatial orthogonal de la Fig.1, les directions X, Y, Z correspondent respectivement aux directions longitudinale, transversale et verticale du véhicule, la direction X étant dirigée vers l'arrière du véhicule. Les termes avant et arrière se rapportent à l'avant et l'arrière du véhicule. Les termes gauche et droit se rapportent à la gauche et la droite du véhicule pour un observateur dans le véhicule regardant vers l'avant de celui-ci.

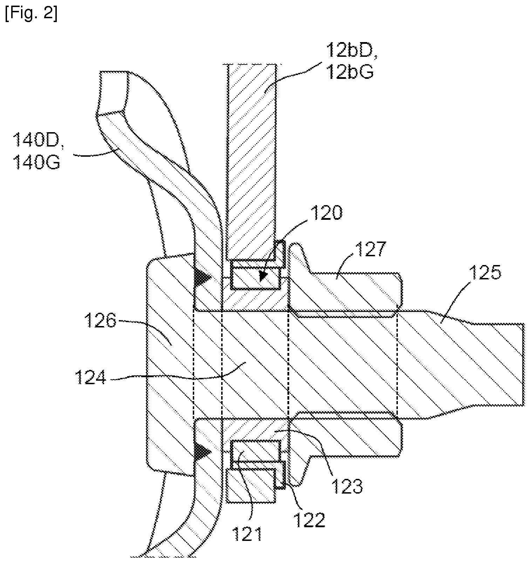

En référence aux Figs.1 et 2, il est maintenant décrit ci-dessous une forme de réalisation particulière 1 d'un ensemble de train avant selon l'invention comprenant un berceau à cornes et deux tirants de berceau et fixé à une structure de caisse d'un véhicule automobile.

Comme visible à la Fig.1, l'ensemble selon l'invention 1 comprend un berceau de train avant 10 équipé de deux cornes de berceau, droite 11D et gauche 11G, ainsi que de deux tirants de berceau, droit 12D et gauche 12G.

Le berceau 10 comprend deux fixations élastiques arrière, comportant un matériau élastomère, destinées à des liaisons mécaniques, typiquement par vis et écrou, avec deux longerons latéraux gauche et droit (non représentés) de la structure de caisse. Seule la fixation élastique arrière droite 100D est visible à la Fig.1.

Les cornes de berceau, droite 11D et gauche 11G, sont solidaires du berceau 10 et se prolongent vers le haut, depuis une base inférieure de celui-ci, jusqu'à des parties formant brancard avant 13 de la structure de caisse. Les cornes de berceau droite 11D et gauche 11G comprennent respectivement des fixations élastiques gauche et droite (non représentées), situées à des extrémités hautes des cornes, pour des liaisons mécaniques, typiquement par vis et écrou, avec des parties de fixation correspondantes du brancard avant 13. Ainsi, la fixation élastique droite de la corne de berceau 11D à la partie correspondante du brancard avant 13 est située au niveau de la zone A montrée à la Fig.1. Les fixations élastiques gauche et droite des cornes de berceau droite 11D et gauche 11G comprennent un matériau élastomère non représenté.

Comme visible aussi à la Fig.1, les deux tirants de berceau gauche 12G et droit 12D assurent des liaisons mécaniques, typiquement par vis et écrou, entre le berceau 10 et la structure de caisse. Plus précisément, les tirants de berceau 12G, 12D, s'étendent sensiblement de manière verticale et sont fixées, par leurs extrémités basses 12bG, 12bD, respectivement à des oreilles de fixation 140G, 140D, de prolonges de berceau 14G, 14D et, par leurs extrémités hautes, à des parties de fixation correspondantes du brancard avant 13 de la structure de caisse. Seule l'extrémité haute 12hD du tirant de berceau 12D est montrée à la Fig.1. Les oreilles de fixation 140G, 140D, sont typiquement soudées aux prolonges de berceau 14G, 14D, respectivement.

Chaque tirant de berceau 12G, 12D, est formé par exemple à partir d'une pièce tubulaire en acier écrasée à ses extrémités. Les extrémités de fixation basse et haute susmentionnées du tirant de berceau 12G, 12D, sont formées dans les extrémités écrasées de la pièce, avec un orifice percé dans chacune des extrémités.

Dans cette forme de réalisation particulière, le tirant de berceau 12G, 12D, est pourvu d'une articulation élastique seulement à son extrémité de fixation basse 12bG, 12bD. Dans d'autres formes de réalisation, l'articulation élastique pourra être prévue à l'extrémité de fixation haute, ou bien, aux deux extrémités de fixation, haute et basse, du tirant de berceau 12G, 12D.

La fixation basse à articulation élastique du tirant de berceau 12G, 12D, avec l'oreillette de fixation 140G, 140D, de la prolonge de berceau 14G, 14D, est montrée en coupe à la Fig.2.

Comme visible à la Fig.2, une articulation élastique 120 est logée dans l'orifice de l'extrémité de fixation basse 12bG, 12bD, du tirant de berceau 12G, 12D. L'articulation élastique 120 comprend un anneau en élastomère 121 qui est pré-comprimé entre deux bagues cylindriques d'armature 122 et 123. La bague cylindrique d'armature 122 est une bague extérieure ajustée dans l'orifice de l'extrémité de fixation basse 12bG, 12bD. La bague cylindrique d'armature 123 est une bague intérieure insérée dans une portion axiale lisse 124 d'une vis de fixation 125. La vis de fixation 125 est ici soudée par sa tête 126 à l'oreillette de fixation 140G, 140D, qu'elle traverse à l'horizontale. Un écrou de serrage 127 est vissé sur une portion filetée de la vis 125 et permet de verrouiller par serrage la fixation mécanique du tirant de berceau sur l'oreillette de fixation de la prolonge de berceau.

L'incorporation d'une articulation élastique dans au moins un point de fixation du tirant de berceau permet un filtrage vibratoire efficace sans limitation des mouvements du berceau, compte-tenu des micro-mouvements d'oscillation et de pivotement autorisés par une telle articulation.

Selon les applications, des élastomères de différents types pourront être utilisés pour les articulations élastiques des tirants de berceau. Ces élastomères devront avoir une bonne aptitude au vieillissement et être adaptés à l'environnement du moteur thermique, avec une température de fonctionnement en continu qui peut dépasser les 65°C. Des élastomères spéciaux, tels que EP, EPM, EPDM-PP ou EPD, ou des élastomères très spéciaux, tel que AEM, seront utilisés dans la plupart des cas. Des élastomères généraux pourront aussi convenir pour certaines applications.

L'invention ne se limite pas aux formes de réalisation particulières qui ont été décrites ici à titre d'exemple.

## Revendications

1. Ensemble de train avant de véhicule (1) comprenant un berceau (10) du type à cornes (11D, 11G) et deux tirants de berceau (12D, 12G), ledit berceau (10) comportant deux points arrière de fixation élastique (100D) à une partie basse d'une structure de caisse de véhicule et deux points avant de fixation élastique (A) à un brancard (13) de ladite structure de caisse de véhicule, lesdits deux points avant de fixation élastique (A) étant assurés par lesdites cornes (11D, 11G), et lesdits deux tirants de berceau (12D, 12G) assurant deux fixations mécaniques supplémentaires entre une partie avant (14D, 14G) dudit berceau (10) et ledit brancard (13) de façon à limiter un affaissement vertical dudit berceau (10) en cas de choc, lesdits deux tirants de berceau (12D, 12G) comprenant chacun au moins une articulation élastique (120) à des extrémités de fixation (12bD, 12hD).

2. Ensemble de train avant de véhicule selon la revendication 1, **caractérisé en ce que** chacun desdits tirants de berceau (12D, 12G) est une pièce tubulaire en acier ayant deux extrémités écrasées comportant chacune un orifice de passage de vis et formant lesdites extrémités de fixation (12bD, 12hD), une dite articulation élastique (100) étant logée dans au moins un dit orifice de passage de vis.

3. Ensemble de train avant de véhicule selon la revendication 1 ou 2, **caractérisé en ce que** ladite articulation élastique (100) comporte un élastomère (121) inclus dans la famille des élastomères spéciaux.

4. Ensemble de train avant de véhicule selon la revendication 1 ou 2, **caractérisé en ce que** ladite articulation élastique (100) comporte un élastomère (121) inclus dans la famille des élastomères très spéciaux.

5. Ensemble de train avant de véhicule selon la revendication 1 ou 2, **caractérisé en ce que** ladite articulation élastique (100) comporte un élastomère (121) inclus dans la famille des élastomères généraux.

6. Ensemble de train avant de véhicule selon l'une quelconque des revendications 1 à 5, **caractérisé en ce que** lesdits deux tirants de berceau (12D, 12G) sont fixés dans ladite partie avant dudit berceau respectivement à deux prolonges de berceau (14D, 10G).

7. Ensemble de train avant de véhicule selon la revendication 6, **caractérisé en ce que** lesdits deux tirants de berceau (12D, 12G) sont fixés respectivement sur deux oreillettes de fixation (140D, 140G) desdites deux prolonges de berceau (12D, 12G).

8. Ensemble de train avant de véhicule selon la revendication 7, **caractérisé en ce que** chaque dite oreillette de fixation (140D, 140G) comprend une vis de fixation soudée (125).

9. Véhicule comprenant un ensemble de train avant de véhicule (1) selon l'une quelconque des revendications 1 à 8.

## Patentansprüche

1. Fahrzeugvorderzuganordnung (1) mit einem Horngestell (10) (11D, 11G) und zwei Gestellzugstangen (12D, 12G), wobei das Gestell (10) zwei hintere elastische Befestigungspunkte (100D) an einem unteren Abschnitt einer Fahrzeugkarosseriestruktur und zwei vordere elastische Befestigungspunkte (A) an einem Gestell (13) der Fahrzeugkarosseriestruktur aufweist, wobei die beiden vorderen elastischen Befestigungspunkte (A) durch die Hörner (11D, 11G) bereitgestellt werden, und zwei Wiegenzugstangen (12D, 12G), die zwei zusätzliche mechanische Befestigungen zwischen einem vorderen Teil (14D, 14G) des Wiegengestells (10) und der Tragschiene (13) gewährleisten, um ein vertikales Absinken des Wiegengestells (10) im Falle eines Aufpralls zu begrenzen, wobei die beiden Wiegenzugstangen (12D, 12G) jeweils mindestens ein elastisches Gelenk (120) an Befestigungsenden (12bD, 12hD) aufweisen.

2. Vorderradbaugruppe nach Anspruch 1, **dadurch gekennzeichnet, dass** jeder der Gestellzuganker (12D, 12G) ein rohrförmiges Stahlteil ist, das zwei zusammengedrückte Enden aufweist, von denen jedes eine Schraubdurchgangsöffnung aufweist und die Befestigungsenden (12bD, 12hD) bildet, wobei ein elastisches Gelenk (100) in mindestens einer der Schraubdurchgangsöffnungen aufgenommen ist.

3. Vorderradbaugruppe nach Anspruch 1 oder 2, **dadurch gekennzeichnet, dass** das elastische Gelenk (100) ein Elastomer (121) aufweist, das in die Familie der speziellen Elastomere aufgenommen ist.

4. Vorderradbaugruppe nach Anspruch 1 oder 2, **dadurch gekennzeichnet, dass** das elastische Gelenk (100) ein Elastomer (121) aufweist, das in die Familie der sehr speziellen Elastomere aufgenommen ist.

5. Vorderradbaugruppe nach Anspruch 1 oder 2, **dadurch gekennzeichnet, dass** das elastische Gelenk (100) ein Elastomer (121) aufweist, das in die allgemeine Elastomerfamilie eingeschlossen ist.

6. Fahrzeugvorderzuganordnung nach einem der Ansprüche 1 bis 5, **dadurch gekennzeichnet, dass** die beiden Wiegenzuganker (12D, 12G) in dem vorderen Abschnitt des Wiegengestells jeweils an zwei Wiegenverlängerungen (14D, 10G) befestigt sind.

7. Fahrzeugvorderwagenbaugruppe nach Anspruch 6, **dadurch gekennzeichnet, dass** die beiden Gestellstützen (12D, 12G) jeweils an zwei Befestigungsansätzen (140D, 140G) der beiden Gestellverlängerungen (12D, 12G) befestigt sind.

8. Fahrzeugvorderwagenbaugruppe nach Anspruch 7, **dadurch gekennzeichnet, dass** jedes Befestigungsansatz (140D, 140G) eine Schweißschraube (125) umfasst.

9. Fahrzeug mit einer Fahrzeugvorderzugbaugruppe (1) nach einem der Ansprüche 1 bis 8.

## Claims

1. A vehicle nose gear assembly (1) comprising a cradle (10) of the horn type (11D, 11G) and two cradle tie rods (12D, 12G), said cradle (10) comprising two rear elastic attachment points (100D) to a lower part of a vehicle body structure and two front elastic attachment points (A) to a stretcher (13) of said vehicle body structure, said two front elastic attachment points (A) being provided by said horns (11D, 11G), and said two rods cradle brackets (12D, 12G) providing two additional mechanical fastenings between a front part (14D, 14G) of said cradle (10) and said stretcher (13) so as to limit a vertical collapse of said cradle (10) in the event of an impact, said two cradle brackets (12D, 12G) each comprising at least one elastic articulation (120) at fastening ends (12bD, 12hD).

2. A vehicle nose gear assembly according to claim 1, **characterized in that** each of said cradle tie rods (12D, 12G) is a tubular steel part having two crushed ends each comprising a screw passage orifice and forming said fixing ends (12bD, 12hD), a said elastic articulation (100) being housed in at least one said screw passage orifice.

3. A vehicle nose gear assembly according to claim 1 or 2, **characterized in that** said elastic articulation (100) comprises an elastomer (121) included in the family of special elastomers.

4. A vehicle nose gear assembly according to claim 1 or 2, **characterized in that** said elastic articulation (100) comprises an elastomer (121) included in the family of very special elastomers.

5. A vehicle nose gear assembly according to claim 1 or 2, **characterized in that** said elastic articulation (100) comprises an elastomer (121) included in the family of general elastomers.

6. A vehicle nose gear assembly according to any one of claims 1 to 5, **characterized in that** said two cradle ties (12D, 12G) are fixed in said front part of said cradle respectively to two cradle extensions (14D, 10G).

7. A vehicle nose gear assembly according to claim 6, **characterized in that** said two cradle tie rods (12D, 12G) are fixed respectively to two attachment lugs (140D, 140G) of said two cradle extensions (12D, 12G).

8. A vehicle nose gear assembly according to claim 7, **characterized in that** each said fixing earpiece (140D, 140G) comprises a welded fixing screw (125).

9. A vehicle comprising a vehicle nose gear assembly (1) according to any one of claims 1 to 8.|
